# EUROPÄISCHE PATENTSCHRIFT

(11) **EP 2 815 558 B1**
(45) Veröffentlichungstag und Bekanntmachung des Hinweises auf die Patenterteilung: **06.04.2016**
(21) Anmeldenummer: 13700127.7
(22) Anmeldetag: 08.01.2013
(51) Int. Cl.: H04L 29/08

(54) **ÜBERTRAGEN VON DATENSTRÖMEN ZWISCHEN EINEM ENDGERÄT UND EINEM SICHERHEITSMODUL**
TRANSFER OF DATA-STREAMS BETWEEN A TERMINAL AND A SECURITY MODULE
TRANSFERT DES FLUX DE DONNEES ENTRE UN TERMINAL ET UN MODULE DE SECURITE

(30) Priorität: 15.02.2012 DE 102012003009
(43) Veröffentlichungstag der Anmeldung: 24.12.2014
(73) Patentinhaber: Giesecke & Devrient GmbH, 81677 München (DE)
(72) Erfinder: ULBRICHT, Thorsten, 81369 München (DE); PHAM NGUYEN, Huy, 80937 München (DE); KRAMPOSTHUBER, Georg, 80639 München (DE)
(86) Internationale Anmeldenummer: PCT/EP2013/000032
(87) Internationale Veröffentlichungsnummer: WO 2013/120569

(56) Entgegenhaltungen:
- EP-A1- 1 679 620
- EP-A2- 1 473 617
- DE-U1-202007 002 971
- US-A1- 2009 119 364

## Beschreibung

Die Erfindung betrifft allgemein das technische Gebiet der Datenkommunikation und spezieller das Gebiet des Übertragens von Datenströmen zu und von einem Sicherheitsmodul. Ein Sicherheitsmodul in der Wortwahl des vorliegenden Dokuments kann beispielsweise die Bauform einer Chipkarte (*Smart Card*) oder eines kompakten Chipmoduls oder eines USB-Datenträgers aufweisen.

Ein bevorzugtes Anwendungsgebiet von Sicherheitsmodulen ist das Verschlüsseln und Entschlüsseln oder das Signieren von Daten. Die Kommunikation eines Endgeräts mit dem Sicherheitsmodul kann über einen im Sicherheitsmodul realisierten Web-Server erfolgen, der beispielsweise nach der "Java Card 3.0"-Spezifikation ausgelegt ist. Hierbei sendet das Endgerät Anforderungen - beispielsweise HTTP-Requests - an das Sicherheitsmodul und erhält zugehörige Antworten - beispielsweise HTTP-Responses.

Die für einen Web-Server typischerweise vorgesehenen Anwendungsprotokolle - beispielsweise HTTP oder dessen gesicherte Variante HTTPS - lassen die Beantwortung einer Anforderung erst dann zu, wenn die Anforderung vollständig empfangen worden ist. Es müssen daher die zu verarbeitenden Daten und/ oder die erzeugten Ergebnisdaten vollständig zwischengespeichert werden. Wegen des bei Sicherheitsmodulen oft knappen Speicherplatzes stellt dies einen erheblichen Ressourcenaufwand dar. Ferner ist die maximale Größe der zu verarbeitenden Daten durch den für die Zwischenspeicherung verfügbaren Speicherplatz beschränkt, auch wenn der eigentliche Verarbeitungsvorgang - beispielsweise ein Ver- oder Entschlüsseln - blockweise ohne eine vollständige Zwischenspeicherung durchgeführt werden könnte. Selbst wenn im Sicherheitsmodul genügend Speicher vorhanden sein sollte, führt eine vollständige Zwischenspeicherung zu unerwünscht langen Reaktionszeiten.

EP 1679 620 A1 zeigt ein Verfahren zum Beantworten einer HTTP-Anforderung in mehreren Teilen. Eine HTTP-Anforderung wird so lange als offen angesehen, bis sie mittels mehrerer HTTP-Antworten vollständig beantwortet worden ist. Jedoch besteht die Schwierigkeit, dass es sich bei diesem Verfahren um eine Erweiterung des HTTP-Standards handelt, die sich nicht ohne weiteres mit üblichen Komponenten - z.B. üblichen Web-Browsern - implementieren lässt.

Die Erfindung hat die Aufgabe, eine Technik zum Verarbeiten von Daten in einem Sicherheitsmodul bereitzustellen, die auch bei umfangreichen Datenmengen nur relativ wenig Speicherplatz benötigt. In bevorzugten Ausgestaltungen soll die Erfindung die Verwendung von Endgeräten mit üblichen Web-Browsern zur Kommunikation mit dem Sicherheitsmodul gestatten.

Die Erfindung ist durch die unabhängigen Ansprüche definiert. Die abhängigen Ansprüche betreffen optionale Merkmale einiger Ausgestaltungen der Erfindung.

Die Erfindung geht von der Grundidee aus, zur Übertragung der zu verarbeitenden Daten eine erste und eine zweite Anforderung an das Sicherheitsmodul zu senden. Die zweite Anforderung enthält den Verarbeitungsdatenstrom, während die erste Anforderung diesen Datenstrom ankündigt. Der Empfang der ersten Anforderung gibt dem Sicherheitsmodul Gelegenheit, unmittelbar auf die erste Anforderung zu antworten und den Ergebnisdatenstrom in dieser Antwort an das Endgerät zu übermitteln. Die Antwort auf die zweite Anforderung ist dagegen lediglich optional. Mit anderen Worten ist es ein wichtiger Aspekt der vorliegenden Erfindung, dass der Ergebnisdatenstrom gerade nicht in derjenigen Antwort übertragen wird, die in Reaktion auf die Anforderung mit dem Verarbeitungsdatenstrom erfolgt. Auf diese Weise überwindet die Erfindung die im Stand der Technik vorhandene Einschränkung, dass in einem Anforderungs-/ Antwork-Paar die Antwort erst dann erzeugt werden kann, wenn die Anforderung vollständig empfangen worden ist.

Die Erfindung bietet den erheblichen Vorteil, dass die Länge der übertragenen Datenströme nicht durch den im Sicherheitsmodul zur Verfügung stehenden Speicherplatz beschränkt ist. Ferner kann in bevorzugten Ausgestaltungen die Kommunikation zwischen Endgerät und Sicherheitsmodul üblichen Anwendungsprotokollen - beispielsweise HTTP oder dessen gesicherter Variante HTTPS - entsprechen, so dass im Endgerät ein üblicher Web-Browser ohne oder lediglich mit geringfügigen Änderungen eingesetzt werden kann. Dies schließt jedoch nicht aus, dass in manchen Ausgestaltungen Erweiterungen des Web-Browsers - z.B. Plug-ins - oder sogar vom Web-Browser unabhängige Anwendungsprogramme zur Kommunikation mit dem Sicherheitsmodul verwendet werden.

Vorzugsweise beginnt das Senden der ersten Antwort mit dem Ergebnisdatenstrom zeitlich vor dem Ende des Empfangens der zweiten Anforderung mit dem Verarbeitungsdatenstrom. Insbesondere ist in manchen Ausgestaltungen vorgesehen, dass der Verarbeitungsdatenstrom abschnittsweise verarbeitet wird, und dass Teile des Ergebnisdatenstroms sukzessive gesendet werden, sobald sie jeweils im Sicherheitsmodul zur Verfügung stehen.

In manchen Ausführungsformen basiert die Kommunikation zwischen dem Endgerät und dem Sicherheitsmodul auf dem *Hypertext Transfer Protocol* (HTTP), worunter im vorliegenden Dokument auch die gesicherte Variante HTTPS verstanden wird. Die Erfindung ist nicht an eine bestimmte Version des HTTP-Protokolls gebunden; insbesondere können HTTP/1.1 oder HTTP/1.0 zum Einsatz kommen.

In unterschiedlichen Ausgestaltungen kann das Sicherheitsmodul die beiden Anforderungen auf unterschiedliche Weise erkennen und unterscheiden. Beispielsweise können diese Anforderungen an unterschiedliche Adressen (unterschiedliche Hostangaben und/ oder unterschiedliche Pfadangaben und/ oder unterschiedliche weitere Anfrageparameter) gerichtet sein. Im Kontext von HTTP wird hierbei in manchen Ausführungsformen unter einer Adresse die URL verstanden. In manchen Ausgestaltungen ist vorgesehen, dass das Sicherheitsmodul dem Endgerät die beiden Adressen in Reaktion auf eine vorbereitende Anforderung mitteilt. Alternativ oder zusätzlich können die beiden Anforderungen anhand ihrer Nachrichtentypen oder ihrer Nutzdaten erkannt und unterschieden werden.

Das Sicherheitsmodul stellt in manchen Ausführungsformen Dienste zur Verschlüsselung von Daten und/ oder zur Entschlüsselung von Daten und/ oder zum Signieren von Daten und/ oder andere Dienste bereit. Der gewünschte Dienst kann beispielsweise durch die Verwendung unterschiedlicher Adressen oder durch eine dienstabhängige Kodierung der Daten angesprochen werden. Die vom Sicherheitsmodul zu verarbeitenden Daten können beispielsweise Dokumente oder Sprachdaten oder Mediendaten sein. Der Aspekt der relativ kurzen Reaktionszeit ist insbesondere bei Echtzeit-Anwendungen wie z.B. Ver- und Entschlüsselungsvorgängen bei der Übertragung von Mediendaten relevant. Solche Mediendaten können insbesondere Sprachdaten (*Secure Voice*) oder andere Audiodaten oder Videodaten sein.

Das Computerprogrammprodukt kann Programmbefehle auf einem körperlichen oder einem nicht-körperlichen Datenträger aufweisen, der beispielsweise bei der Herstellung oder Initialisierung eines erfindungsgemäßen Sicherheitsmoduls verwendet werden kann. Ein solcher Datenträger kann z.B. eine CD-ROM oder ein Halbleiterspeicher oder ein über ein Computernetz übermitteltes Signal sein.

Weitere Merkmale, Vorteile und Aufgaben der Erfindung gehen aus der folgenden genauen Beschreibung mehrerer Ausführungsbeispiele hervor. Es wird auf die Zeichnungen verwiesen, in denen zeigen:
Fig.1 eine schematische Darstellung eines Ausführungsbeispiels der Erfindung beim Übertragen von Datenströmen zwischen einem Endgerät und einem Sicherheitsmodul,
Fig. 2 eine genauere Darstellung eines Teils des Ablaufs von Fig.1, und
Fig. 3 eine Darstellung von Schritten des von dem Sicherheitsmodul ausgeführten Verfahrens in dem Ausführungsbeispiel von Fig.1.

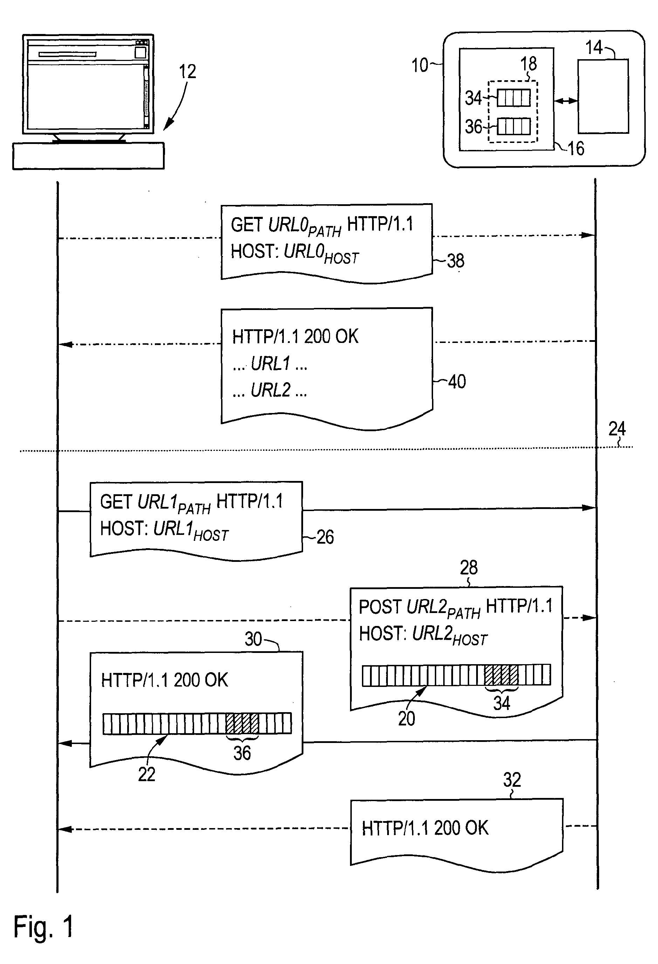

Fig. 1 zeigt ein System, bei dem ein Sicherheitsmodul 10 und ein Endgerät 12 zusammenwirken. Das Sicherheitsmodul 10 ist im vorliegenden Ausführungsbeispiel als Chipkarte oder als kompaktes Chipmodul - z.B. als USB-Modul - ausgestaltet. Das Endgerät 12 kann beispielsweise ein persönlicher Computer sein, auf dem ein üblicher Web-Browser ausgeführt wird. In Ausführungsalternativen kann als Endgerät 12 auch ein Mobilgerät - z.B. ein Mobiltelefon oder ein PDA - mit einem entsprechenden Web-Browser eingesetzt werden. Das Sicherheitsmodul 10 ist mit dem Endgerät 12 beispielsweise über eine USB-Schnittstelle oder eine Chipkarten-Schnittstelle gemäß ISO/IEC 7814 oder eine Funkschnittstelle - z.B. Bluetooth oder WLAN - verbunden.

Das Sicherheitsmodul 10 weist einen Prozessor 14 und einen Speicher 16 auf. Der Speicher 16 ist mit mehrere Speicherbereiche unterteilt, die in unterschiedlichen Technologien ausgebildet sind. So enthält beispielsweise ein als Festwertspeicher oder als Flash-Speicher ausgestalteter Bereich ein Betriebssystem, einen Protokollstapel, einen Web-Server und ein Verarbeitungsprogramm. Das Verarbeitungsprogramm stellt diejenigen Funktionen bereit, die das Endgerät 12 vom Sicherheitsmodule 10 anfordert. Insbesondere können diese Funktionen das Verschlüsseln oder Entschlüsseln von Daten beinhalten. Ferner ist in einem RAM-Bereich des Speichers 16 ein Pufferspeicher 18 ausgebildet, in dem eingehende und ausgehende Datenpakete zwischengespeichert werden.

Das Sicherheitsmodul 10 ist dazu ausgelegt, Anforderungen (*requests*) vom Endgerät 12 zu erhalten und Antworten (*responses*) an das Endgerät 12 zu senden. Hierzu wird auf physikalischer Ebene das durch die Schnittstelle zwischen dem Sicherheitsmodul 10 und dem Endgerät 12 vorgegebene Protokoll verwendet. Auf den höheren Ebenen werden die durch den Protokollstapel des Sicherheitsmoduls 10 bereitgestellten Protokolle eingesetzt. Insbesondere ist für die Vermittlungs- und Transportschicht ein Protokoll vorgesehen, das Daten bei der Übertragung in Blöcke aufzuteilen vermag. Ein solches Protokoll kann z.B. TCP/IP oder BIP (*Bearer Independent Protocol*) sein. Der Web-Server des Sicherheitsmoduls 10 implementiert die Kommunikation in der Anwendungsschicht, beispielsweise mittels HTTP oder HTTPS.

In Fig.1 ist ein beispielhafter Kommunikationsvorgang gezeigt, gemäß dem ein Benutzer des Endgeräts 12 über den auf dem Endgerät 12 ausgeführten Web-Browser zu verarbeitende Daten in Form eines Verarbeitungsdatenstroms 20 an das Sicherheitsmodul 10 überträgt und im Gegenzug einen Ergebnisdatenstrom 22 vom Sicherheitsmodul 10 erhält. Die Daten im Ergebnisdatenstrom 22 werden durch das Verarbeitungsprogramm des Sicherheitsmodul 10 aus den Daten des Verarbeitungsdatenstroms 20 erzeugt. Beispielsweise kann das Verarbeitungsprogramm die Daten im Verarbeitungsdatenstrom 20 verschlüsseln oder entschlüsseln. Allerdings sind sowohl der Verarbeitungsdatenstrom 20 als auch der Ergebnisdatenstrom 22 so umfangreich, dass sie nicht vollständig im Pufferspeicher 18 Platz finden würden. Es wird hier zunächst der in Fig.1 unterhalb der Linie 24 gezeigte Verfahrensabschnitt geschildert, der davon ausgeht, dass dem Endgerät 12 zwei Adressen *URL1* und *URL2* bekannt sind, auf die der Web-Server des Sicherheitsmoduls 10 anspricht. Im hier beschriebenen Ausführungsbeispiel ist jede der beiden Adressen *URL1* und *URL2* als einheitliche Ressourcenbezeichnung (URL = *Uniform Resource Locator*) ausgebildet. In an sich bekannter Weise weist eine URL eine Angabe des zu verwendenden Protokolls, eine Hostangabe, eine Pfadangabe und optional weitere Bestandteile (z.B. einen *Query String* zur Übermittlung von Anfrageparametern) auf.

Im hier beschriebenen Ausführungsbeispiel wird als Protokoll HTTP oder HTTPS verwendet, so dass die Protokollangabe "http:" oder "https:" lautet. Als Hostangabe *URL1_{HOST}* enthält die erste Adresse *URL1* einen Hostnamen oder eine numerische IP-Adresse, unter der das Sicherheitsmodul 10 vom Endgerät 12 ansprechbar ist. Entsprechendes gilt für die Hostangabe *URL2_{HOST}* der zweiten Adresse *URL2*. Als Pfadangabe enthält die erste Adresse *URL1* eine erste Pfadangabe *URL1_{PATH}*, und die zweite Adresse *URL2* enthält eine zweite Pfadangabe *URL2_{PATH}*. Jede der beiden Pfadangaben weist die Syntax eines URL-Pfades gemäß dem HTTP-Standard auf.

In vielen Ausführungsbeispielen sind die beiden Adressen *URL1* und *URL2* unterschiedlich in dem Sinne, dass sich ihre Hostangaben *URL1_{HOST}*, *URL2_{HOST}* und/oder ihre Pfadangaben *URL1_{PATH}*, *URL2_{PATH}* und/oder weitere Anfrageparameter unterscheiden. Dies ist aber, wie unten noch genauer erläutert werden wird, nicht zwingend erforderlich.

Im hier beschriebenen Ausführungsbeispiel richtet das Endgerät 12 eine erste Anforderung 26 als GET-Anforderung an die erste Adresse *URL1.* Wenn das Sicherheitsmodul 10 in einem privaten Netz unter der IP-Adresse 192.168.0.2 erreichbar ist und die Pfadangabe "getdata" lautet, kann die erste Anforderung 26 beispielsweise lauten:
GET getdata HTTP/1.1
HOST: 192.168.0.2

Das Sicherheitsmodul 10 interpretiert die eingehende erste Anforderung 26 beispielsweise wegen der speziellen Hostangabe *URL1_{HOST}* und/ oder wegen der speziellen Pfadangabe *URL1_{PATH}* als Ankündigung, dass das Endgerät 12 nun eine zweite Anforderung 28 mit einem Verarbeitungsdatenstrom 20 senden wird.

Ohne auf eine Antwort auf die erste Anforderung 26 zu warten, erzeugt der vom Endgerät 12 ausgeführte Web-Browser nun die zweite Anforderung 28. Diese zweite Anforderung 28 kann jede Art von Anforderung sein, die eine Übermittlung des Verarbeitungsdatenstrom 20 an das Sicherheitsmodul 10 gestattet. Beispielsweise kann die zweite Anforderung 28 eine HTTP-POST-Methode oder eine HTTP-PUT-Methode aufweisen. Zum Beispiel kann die zweite Anforderung 28 wie folgt lauten, wenn die gleiche Hostangabe wie bei der ersten Anforderung 26 und, zur Unterscheidung von der Adresse *URL1* der ersten Anforderung 26, die Pfadangabe "postdata" verwendet werden:
POST postdata HTTP/1.1
HOST: 192.168.0.2

### < Verarbeitungsdatenstrom 20 >

In der Regel werden die beiden Anforderungen durch ein vom Web-Browser des Endgeräts 12 ausgeführtes Hilfsprogramm (*Applet* oder *Plug*-*in*) automatisch erzeugt, sobald ein Benutzer eine bestimmte Funktion auf einer vom Browser angezeigten Seite oder einen bestimmen Menüpunkt des Browsers anwählt. Das Hilfsprogramm kann beispielsweise ein vom Browser ausgeführtes JavaScript-Programm sein, das lokal im Endgerät 12 gespeichert ist oder von einer externen Adresse - beispielsweise dem Web-Server des Sicherheitsmoduls 10 - geladen wird. Es sind jedoch auch Ausgestaltungen vorgesehen, bei denen der Benutzer das Senden der beiden Anforderungen 26,28 manuell auslöst, indem er zunächst auf einen Verweis klickt und dann eine als Verarbeitungsdatenstrom 20 zu sendende Datei in einem Eingabeformular wählt und absendet.

Im vorliegenden Ausführungsbeispiel unterscheidet das Sicherheitsmodul 10 die beiden Anforderungen 26, 28 anhand der unterschiedlichen Adressen *URL1* und *URL2,* also der unterschiedlichen Hostangaben *URL1_{HOST}, URL2_{HOST}* und/oder Pfadangaben *URL1_{PATH}, URL2_{PATH}* und/oder weiteren Anfrageparameter. In anderen Ausgestaltungen kann das Sicherheitsmodul 10 die beiden Anforderungen 26, 28 auch aufgrund der unterschiedlichen HTTP-Methoden erkennen, so dass in diesem Fall identische Adressen *URL1* und *URL2* verwendet werden können.

Der vom Endgerät 12 ausgeführte Web-Browser sendet die zu verarbeiteten Daten als Verarbeitungsdatenstrom 20 im Nachrichtenkörper (*message body*) der zweiten Anforderung 26 an das Sicherheitsmodul 10. Hierbei wird in der Vermittlungs- und Transportschicht ein Protokoll verwendet, das den umfangreichen Verarbeitungsdatenstrom 20 blockweise überträgt. Der Verarbeitungsdatenstrom 20 geht also beim Sicherheitsmodul 10 sukzessive in Form einzelner Teile oder Blöcke oder Pakete ein. In Fig.1 ist beispielhaft gezeigt, dass das Sicherheitsmodul 10 einen eingehenden Teil 34 des Verarbeitungsdatenstroms 20 im Pufferspeicher 18 zwischenspeichert.

Während des noch laufenden Empfangs des Verarbeitungsdatenstroms 20 beginnt der Prozessor 14, gesteuert von dem im Sicherheitsmodul 10 vorliegenden Verarbeitungsprogramm, zumindest einen Teil des bereits empfangenen Verarbeitungsdatenstroms 20 zu verarbeiten, also beispielsweise zu verschlüsseln oder zu entschlüsseln. Während des noch laufenden Empfangs des Verarbeitungsdatenstroms 20 entsteht somit der Ergebnisdatenstrom 22.

Sobald das Sicherheitsmodul 10 zumindest einen Teil des Ergebnisdatenstroms 22 erzeugt hat, beginnt das Sicherheitsmodul 10, eine erste Antwort 30 auf die bereits vollständige empfangene erste Anforderung 26 zu senden. Die erste Antwort 30 besteht im hier beschriebenen Ausführungsbeispiel gemäß dem HTTP-Protokoll aus einer Statusmeldung im Nachrichtenkopf, während der Ergebnisdatenstrom 22 im Nachrichtenkörper übermittelt wird:
HTTP/1.1220 OK

### < Ergebnisdatenstrom 22 >

Ebenso wie für den Verarbeitungsdatenstrom 20 wird im vorliegenden Ausführungsbeispiel angenommen, dass der Ergebnisdatenstrom 22 umfangreicher als der vorhandene Platz im Pufferspeicher 18 des Sicherheitsmoduls 10 ist. Es wird daher nur jeweils ein Teil 36 des Verarbeitungsdatenstroms 20 im Pufferspeicher 18 gespeichert. Diese Teile - z.B. der Teil 36 - werden sukzessive in der ersten Antwort 30 übertragen. Wie bereits erwähnt, unterstützt das der Übertragung zugrundeliegende Kommunikationsprotokoll - z.B. TCP/IP oder BIP - eine solche abschnittsweise Übertragung von umfangreichen Nachrichten.

Das Sicherheitsmodul 10 verwaltet den zur Verfügung stehenden Speicherplatz im Pufferspeicher 18 in geeigneter Weise. So kann z.B. der Pufferspeicher 18 als Ringpuffer - mit einer einzigen Ringstruktur oder zwei getrennten Ringstrukturen für die Verarbeitungs- bzw. Ergebnisdaten - organisiert sein. Alternativ können im Pufferspeicher 18 mehrere feste Speicherbereiche für je einen Teil 34, 36 vorgesehen sein. Die vom Sicherheitsmodul 10 ausgeführten Verarbeitungsvorgänge müssen natürlich abschnittsweise auf dem Verarbeitungsdatenstrom 20 ausgeführt werden können. Mit anderen Worten muss das vom Sicherheitsmodul 10 ausgeführte Verarbeitungsprogramm in der Lage sein, den Ergebnisdatenstrom 22 sukzessive zu erzeugen, auch wenn ein Teil des bisher empfangenen Verarbeitungsdatenstroms 20 bereits wieder im Pufferspeicher 18 überschrieben wurde. Insgesamt vermag das Sicherheitsmodul 10 daher den Verarbeitungsdatenstrom 20 auch dann zu verarbeiten, wenn dessen Länge größer als der im Pufferspeicher 18 zur Verfügung stehende Speicherplatz ist.

Der vom Endgerät 12 ausgeführte Web-Browser empfängt den Ergebnisdatenstrom 22 sukzessive. Beispielsweise können diese Daten in einem Browser-Fenster dargestellt oder in einer Datei auf dem Endgerät 12 gespeichert werden.

Sobald der Ergebnisdatenstrom 22 vollständig an das Endgerät 12 gesendet worden ist, sendet das Sicherheitsmodul 10 eine zweite Antwort 32, um die zweite Anforderung 28 gemäß dem HTTP-Standard abzuschließen. Der Inhalt der zweiten Antwort kann beispielsweise lauten:
HTTP/1.1200 OK

In manchen Ausgestaltungen können in der zweiten Antwort 32 zusätzliche Inhalte übertragen werden, insbesondere Status- und/ oder Fehlermeldungen. Das Senden der zweiten Antwort 32 kann jedoch auch völlig unterbleiben, da die insgesamt gewünschten Informationen, nämlich der Ergebnisdatenstrom 22, bereits in der ersten Antwort 30 auf die erste Anforderung 26 übermittelt worden ist.

Konzeptuell wird das erste Paar aus der ersten Anforderung 26 und der ersten Antwort 30 über einen ersten Kanal zwischen dem Endgerät 12 und dem Sicherheitsmodul 10 übertragen, und das zweite Paar aus der zweiten Anforderung 28 und der zweiten Antwort 32 wird über einen zweiten Kanal übertragen. In Fig.1 ist die Datenübertragung über den ersten Kanal mit durchgezogenen Pfeilen veranschaulicht, und die Datenübertragung über den zweiten Kanal ist mit gestrichelten Pfeilen veranschaulicht. Im allgemeinsten Sinne ist hierbei unter einem "Kanal" jeder Kommunikationsweg zu verstehen, der zur Übermittlung eines Paars aus einer Anforderung und der zugehörigen Antwort dient. Der erste und der zweite Kanal können daher z.B. über eine einzige TCP-Verbindung laufen, wenn eine korrekte Zuordnung zwischen jeder Anforderung 26,28 und der zugehörigen Antwort 30,32 sichergestellt ist. In vielen Ausgestaltungen der Erfindung wird jedoch für jeden der beiden Kanäle ein eigener Kommunikationsweg der Transportschicht - beispielsweise eine eigene TCP-Verbindung - auf- und wieder abgebaut.

Das bisher beschriebene Verfahren kann um einen vorbereitenden Teil erweitert werden, in dem das Sicherheitsmodul 10 dem Endgerät 12 die beiden Adressen *URL1* und *URL2* übermittelt. Ein Ausführungsbeispiel für diesen vorbereitenden Teil ist in Fig. 1 über der Trennlinie 24 veranschaulicht. Das Endgerät 12 fordert hier die Adressen *URL1* und *URL2* vom Sicherheitsmodul 10 in einer vorbereitenden Anforderung 38 an. Die vorbereitende Anforderung 38 ist an eine Adresse *URL0* gerichtet, die sich in der Regel von den Adressen *URL1* und *URL2* unterscheidet. Insbesondere kann die Adresse *URL0* besonders einfach aufgebaut sein, so dass der Benutzer diese Adresse direkt in eine Adresszeile des auf dem Endgerät 12 ausgeführten Web-Browsers eingeben kann. Eine solche einfache Adresse kann z.B. eine leere Pfadangabe *URL0_{PATH}* = "/" aufweisen, so dass die vorbereitenden Anforderung 38 an das Sicherheitsmodul 10 beispielsweise wie folgt lauten kann:
GET / HTTP/1.1
HOST: 192.168.0.2

Der Web-Server des Sicherheitsmoduls 10 reagiert auf die vorbereitende Anforderung 38 mit dem Absenden einer vorbereitenden Antwort 40, in deren Nachrichtenkörper die erste und die zweite Adresse *URL1, URL2* enthalten sind. Diese vorbereitenden Kommunikationsschritte 38, 40 bieten den Vorteil, dass die beiden Adressen *URL1, URL2* nicht vorab bekannt sein müssen und gegebenenfalls für jeden neuen Verfahrensablauf neu festgelegt werden können.

In einem besonders einfachen Ausführungsbeispiel kann die vorbereitende Antwort 40 HTML-Code aufweisen, der den Web-Browser des Endgeräts 12 zur Anzeige zweier Schaltflächen veranlasst, mit denen der Benutzer die erste und die zweite Anforderung 26, 28 manuell auslösen kann. Bequemer ist es jedoch für den Benutzer, wenn die vorbereitende Antwort 40 Programmcode - z.B. in JavaScript - enthält, der eine komfortable Bedienoberfläche bereitstellt und die erforderlichen Kommunikationsvorgänge mit dem Sicherheitsmodul 10 automatisch steuert. In anderen Ausführungsbeispielen kann derartiger Programmcode bereits vorab in den Web-Browser des Endgeräts 12 geladen worden sein oder in Form eines Browser-Plug-in oder eines separaten Anwendungsprogramms auf dem Endgerät 12 ausgeführt werden. In diesem Fall braucht die vorbereitende Antwort 40 lediglich die beiden Adressen *URL1, URL2* in geeignet kodierter Form zu enthalten.

In Ausführungsbeispielen, bei denen der Verfahrensablauf seitens des Endgeräts 12 durch Programmcode - in Form eines separaten Anwendungsprogramms oder ausgeführt innerhalb des Web-Browsers - gesteuert wird, kann gegebenenfalls auf die vorbereitenden Kommunikationsschritte 38, 40 verzichtet werden, wenn die Information über die Adressen *URL1, URL2* bereits in diesem Programmcode enthalten ist.

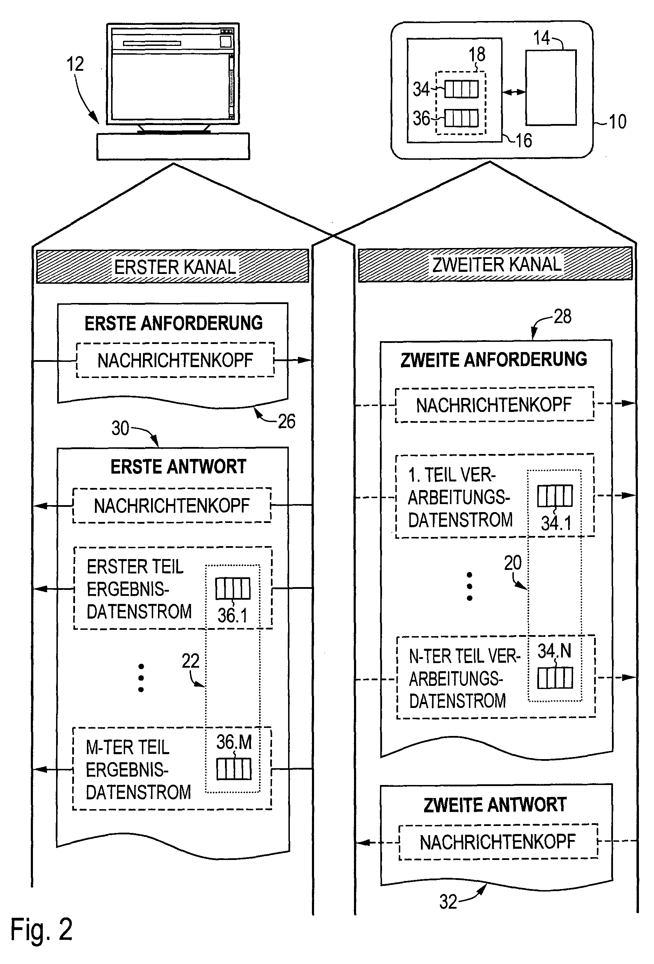

In Fig. 2 ist ein Beispiel für die zeitliche Verzahnung bei der paketweisen Übertragung des Verarbeitungsdatenstroms 20 in der zweiten Anforderung 28 und des Ergebnisdatenstroms 22 in der ersten Antwort 30 veranschaulicht. Die Teile des Verbindungsdatenstroms 20 sind hier mit den Bezugszeichen 34.1 für den ersten Teil bis 34.N für den N-ten und letzten Teil versehen. Entsprechend sind die Teile des Ergebnisdatenstroms 22 mit den Bezugszeichen 36.1 für den ersten Teil bis 36.M für den M-ten und letzten Teil bezeichnet.

Wichtig ist in dem in Fig. 2 gezeigten Beispiel, dass sich die zweite Anforderung 28 zeitlich mit der ersten Anforderung 30 überlappt, so dass zumindest ein Teil 36.1, ..., 36.M des Ergebnisdatenstroms 22 gesendet wird, noch bevor der letzte Teil des 34.N des Verarbeitungsdatenstroms 20 beim Sicherheitsmodul 10 eingegangen ist. In manchen Ausgestaltungen ist für diese Überlappung ein maximaler Versatz vorgesehen, der zumindest auch durch die Größe des Pufferspeichers 18 bestimmt sein kann. Beispielsweise kann das Sicherheitsmodul 10 so ausgelegt sein, dass die Erzeugung und Übermittlung von Ergebnisdaten zu einem eingehenden Teil 34.i des Verarbeitungsdatenstroms 20 abgeschlossen ist, bevor der Teil 34.(i+v) eingeht, wobei der maximale Versatz v beispielsweise 1 oder 2 oder 4 oder 8 oder 16 betragen kann.

In Fig. 2 sind die Nachrichtenköpfe der zweiten Anforderung 28 und der ersten Antwort 30 getrennt von den jeweils ersten Teilen 34.1 bzw. 36.1 gezeigt, aber es versteht sich, dass in manchen Ausführungsformen diese Nachrichtenköpfe auch in je einem einzigen Datenpaket zusammen mit dem jeweiligen ersten Teil 34.1 bzw. 36.1 übertragen werden können.

Ferner veranschaulicht Fig. 2 nochmals die Verwendung zweier logischer Kanäle zur Übertragung des ersten Anforderungs-/ Antwort-Paares 26, 30 einerseits und des zweiten Anforderungs-/ Antwort-Paares 28, 32 andererseits. Wie bereits erwähnt, können diese Kanäle zwei unterschiedlichen Kommunikationswegen - z.B. zwei unterschiedlichen TCP-Verbindungen - entsprechen. In manchen Ausführungsformen sind die beiden Kanäle jedoch rein konzeptuell zu verstehen, sofern der verwendete Kommunikationsweg eine parallele oder ineinander verzahnte Übertragung der zweiten Anforderung 28 und der ersten Antwort 30 zulässt.

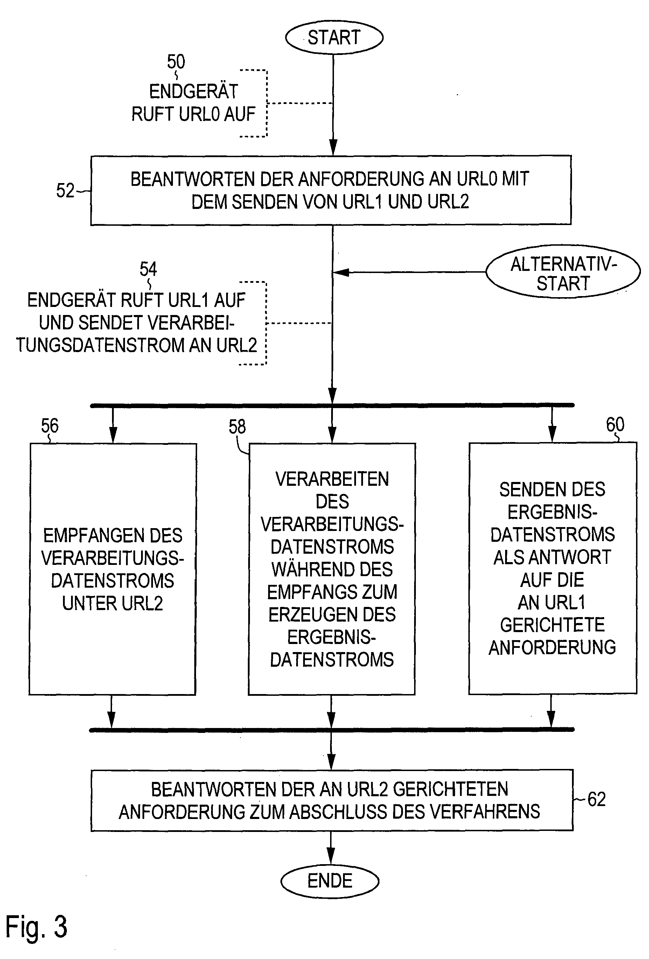

Fig. 3 veranschaulicht nochmals den Ablauf des hier beispielhaft beschriebenen Verfahrens 50 zum Übertragen und Verarbeiten von Daten aus der Sicht des Sicherheitsmoduls 10. Das Verfahren beginnt in Schritt 50 mit dem Aufruf der Adresse *URL0* durch das Endgerät 12 in der vorbereitenden Anforderung 38. Das Sicherheitsmodul 10 beantwortet diese Anforderung 38 in Schritt 52 mit dem Senden der vorbereitenden Antwort 40, die die Adressen *URL1* und *URL2* enthält. Wie durch das Symbol "Alternativstart" veranschaulicht ist, können die Schritte 50 und 52 entfallen, wenn dem Endgerät 12 die Adressen *URL1* und *URL2* bereits anderweitig bekannt sind.

Das Endgerät 12 sendet daraufhin in Schritt 54 die erste Anforderung 26 an die erste Adresse *URL1* und die zweite Anforderung 28 an die zweite Adresse *URL2.* Hierbei kündigt die erste Anforderung 26 die bevorstehende Übertragung des Verarbeitungsdatenstroms 20 an, während die zweite Anforderung 28 diesen Verarbeitungsdatenstrom 20 enthält. Ferner ermöglicht es die erste Anforderung 26 dem Sicherheitsmodul 10, unmittelbar mit der ersten Antwort 30 zu antworten und den Ergebnisdatenstrom 22 sukzessive in der ersten Antwort 30 an das Endgerät 12 zu übermitteln.

Zur Beantwortung der ersten Anforderung 26 führt das Sicherheitsmodul 10 drei Schritte 56, 58, 60 parallel oder nebenläufig oder ineinander verzahnt aus. Erstens empfängt das Sicherheitsmodul 10 in Schritt 56 eingehende Teile 34.1,..., 34.N des Verarbeitungsdatenstroms 20 unter der Adresse *URL2.* Zweitens verarbeitet das Sicherheitsmodul 12 in Schritt 58 die eingehenden Daten und erzeugt sukzessive die Teile 36.1, ..., 36.M des Ergebnisdatenstroms 22. Drittens sendet das Sicherheitsmodul 10 in Schritt 60 jeden Teil 36.1, ..., 36.M des Ergebnisdatenstroms 22 in der ersten Antwort 30, sobald dieser Teil 36.1, ..., 36.M jeweils vorliegt.

Sobald der Ergebnisdatenstrom 22 vollständig an das Endgerät 12 abgesandt wurde, ist die erste Antwort 30 beendet. In einem abschließenden, optionalen Schritt 62 beantwortet das Sicherheitsmodul 10 die zweite Anforderung 28 mit der zweiten Antwort 32, die den erfolgreichen Abschuss des Verfahrens signalisiert.

Es versteht sich, dass die hier beschriebenen Ausführungsformen und Ausführungsvarianten lediglich als Beispiele zu sehen sind. Weitere Abwandlungen und Kombinationen der hier beschriebenen Merkmale sind für den Fachmann unmittelbar ersichtlich.

## Patentansprüche

1. Verfahren zum Übertragen von Datenströmen (20, 22) zwischen einem Endgerät (12) und einem tragbaren Sicherheitsmodul (10), das einen Web-Server aufweist, wobei das Verfahren die folgenden vom Sicherheitsmodul (12) unter Verwendung des Web-Servers ausgeführten Schritte beinhaltet:
- Empfangen einer ersten Anforderung (26), die einen Verarbeitungsdatenstrom (20) ankündigt,
- Empfangen (56) einer zweiten Anforderung (28), die den Verarbeitungsdatenstrom (20) enthält,
- Erzeugen (58) eines Ergebnisdatenstroms (22) basierend auf bereits empfangenen Daten des Verarbeitungsdatenstroms (20) während des Empfangens des Verarbeitungsdatenstroms (20),
- Senden (60) einer ersten Antwort (30) auf die erste Anforderung (26) während des Erzeugens (58) des Ergebnisdatenstroms (22), wobei die erste Antwort (30) den Ergebnisdatenstrom (22) enthält.

2. Verfahren nach Anspruch 1, das ferner beinhaltet:
- Senden (62) einer zweiten Antwort (32) auf die zweite Anforderung (28) nach dem Ende des Sendens (60) des Ergebnisdatenstroms (22), wobei die zweite Antwort (32) den Abschluss des Verfahrens signalisiert.

3. Verfahren nach Anspruch 1 oder Anspruch 2, **dadurch gekennzeichnet, dass** die Kommunikation zwischen dem Endgerät (12) und dem Sicherheitsmodul (10) auf dem *Hypertext Transfer Protocol* (HTTP) basiert.

4. Verfahren nach einem der Ansprüche 1 bis 3, **dadurch gekennzeichnet, dass**
- die erste Anforderung (26) eine HTTP-GET-Methode enthält,
- die zweite Anforderung (28) eine HTTP-PUT-Methode oder eine HTTP-POST-Methode enthält, und
- der Verarbeitungsdatenstrom (20) im Nachrichtenkörper der zweiten Anforderung (28) empfangen wird, und der Ergebnisdatenstrom (22) im Nachrichtenkörper der ersten Antwort (30) gesendet wird.

5. Verfahren nach einem der Ansprüche 1 bis 4, **dadurch gekennzeichnet, dass** die erste und die zweite Anforderung (26, 28) je eine Adresse (*URL1,* URL2) enthalten, und dass das Sicherheitsmodul (10) dazu eingerichtet ist, diese Anforderungen (26, 28) zumindest zum Teil anhand ihrer Adressen (*URL1*, *URL2*) zu unterscheiden.

6. Verfahren nach Anspruch 5, **dadurch gekennzeichnet, dass** das Sicherheitsmodul (10) unter Verwendung des Web-Servers eine vorbereitende Anforderung (38) empfängt und eine vorbereitende Antwort (40) auf die vorbereitende Anforderung (38) sendet, wobei die vorbereitende Antwort (40) eine erste Adresse (*URL1*) für die erste Anforderung (26) und eine zweite Adresse (*URL2*) für die zweite Anforderung (28) enthält.

7. Verfahren nach einem der Ansprüche 1 bis 6, **dadurch gekennzeichnet, dass** der Beginn des Sendens (60) der ersten Antwort (30) zeitlich vor dem Ende des Empfangens (56) der zweiten Anforderung (28) erfolgt.

8. Verfahren nach einem der Ansprüche 1 bis 7, **dadurch gekennzeichnet, dass** das Sicherheitsmodul (10) einen Pufferspeicher (18) zum Zwischenspeichern von Daten des Verarbeitungsdatenstroms (20) und/oder des Ergebnisdatenstroms (22) aufweist, wobei während des Verfahrensablaufs fortlaufend Teile (34; 34.1, ..., 34.N; 36; 36.1, ..., 36.M) des Verarbeitungsdatenstroms (20) und/ oder des Ergebnisdatenstroms (22) in dem Pufferspeicher (18) zwischengespeichert und durch nachfolgende Teile (34; 34.1, ..., 34.N; 36; 36.1, ..., 36.M) überschrieben werden, so dass die vom Sicherheitsmodul (10) maximal verarbeitbare Länge des Verarbeitungsdatenstroms (20) und/ oder des Ergebnisdatenstroms (22) größer als die Kapazität des Pufferspeichers (18) ist.

9. Verfahren nach einem der Ansprüche 1 bis 8, **dadurch gekennzeichnet, dass** das Erzeugen (58) des Ergebnisdatenstroms (22) ein Verschlüsseln oder Entschlüsseln von bereits empfangenen Daten des Verarbeitungsdatenstroms (20) umfasst.

10. Verfahren nach einem der Ansprüche 1 bis 9, **dadurch gekennzeichnet, dass** das Sicherheitsmodul (10) als Chipkarte oder als Chipmodul oder als USB-Datenträger ausgebildet ist.

11. Verfahren zum Übertragen von Datenströmen (20, 22) zwischen einem Endgerät (12), das einen Web-Browser aufweist, und einem tragbaren Sicherheitsmodul (10), wobei das Verfahren die folgenden vom Endgerät (12) unter Verwendung des Web-Browsers ausgeführten Schritte beinhaltet:
- Senden einer ersten Anforderung (26), die einen Verarbeitungsdatenstrom (20) für das Sicherheitsmodul (10) ankündigt,
- Senden einer zweiten Anforderung (28), die den Verarbeitungsdatenstrom (20) enthält,
- Empfangen einer ersten Antwort (30) auf die erste Anforderung (26) während des Sendens des Verarbeitungsdatenstroms (20) in der zweiten Anforderung (28), wobei die erste Antwort (30) einen vom Sicherheitsmodul (10) aus dem Verarbeitungsdatenstrom (20) erzeugten Ergebnisdatenstrom (22) enthält.

12. Verfahren nach Anspruch 11, **dadurch gekennzeichnet, dass**
- die erste Anforderung (26) eine HTTP-GET-Methode enthält,
- die zweite Anforderung (28) eine HTTP-PUT-Methode oder eine HTTP-POST-Methode enthält, und
- der Verarbeitungsdatenstrom (20) im Nachrichtenkörper der zweiten Anforderung (28) gesendet wird, und der Ergebnisdatenstrom (22) im Nachrichtenkörper der ersten Antwort (30) empfangen wird.

13. Tragbares Sicherheitsmodul (10) mit einem Prozessor (14) und mindestens einem Speicher (16), **dadurch gekennzeichnet, dass** das Sicherheitsmodul (10) dazu eingerichtet ist, ein Verfahren nach einem der Ansprüche 1 bis 10 auszuführen.

14. Computerprogrammprodukt, das Programmbefehle für mindestens einen Prozessor (14) eines Sicherheitsmoduls (10) aufweist, wobei die Programmbefehle den mindestens einen Prozessor (14) dazu veranlassen, ein Verfahren nach einem der Ansprüche 1 bis 10 auszuführen.

15. Computerprogrammprodukt, das Programmbefehle für mindestens einen Prozessor eines Endgeräts (12) aufweist, wobei die Programmbefehle den mindestens einen Prozessor dazu veranlassen, ein Verfahren nach einem der Ansprüche 11 oder 12 auszuführen.

## Claims

1. A method for transmitting data streams (20,22) between a terminal (12) and a portable security module (10) having a web server, wherein the method comprises the following steps executed by the security module (12) utilizing the web server:
- receiving a first request (26) announcing a processing data stream (20),
- receiving (56) a second request (28) containing the processing data stream (20),
- generating (58) a result data stream (22) based on the already received data of the processing data stream (20) during the receipt of the processing data stream (20),
- sending (60) a first response (30) to the first request (26) during the generation (58) of the result data stream (22), wherein the first response (30) contains the result data stream (22).

2. The method according to claim 1, further containing:
sending (62) a second response (32) to the second request (28) after the end of the sending (60) of the result data stream (22), wherein the second response (32) signals the conclusion of the method.

3. The method according to claim 1 or claim 2, **characterized in that** the communication between the terminal (12) and the security module (10) is based on the hypertext transfer protocol (HTTP).

4. The method according to any of the claims 1 to 3, **characterized in that** the first request (26) contains an HTTP-GET method, the second request (28) contains an HTTP-PUT method or an HTTP-POST method, and
the processing data stream (20) is received in the message body of the second request (28), and the result data stream (22) is sent in the message body of the first response (30).

5. The method according to any of the claims 1 to 4, **characterized in that** the first and the second request (26, 28) contain respectively one address (*URL1, URL2*), and that the security module (10) is adapted to distinguish these requests (26, 28) at least partly on the basis of their addresses (*URL1, URL2*).

6. The method according to claim 5, **characterized in that** the security module (10), utilizing the web server, receives a preparatory request (38) and sends a preparatory response (40) to the preparatory request (38), wherein the preparatory response (40) contains a first address (*URL1*) for the first request (26) and a second address (*URL2*) for the second request (28).

7. The method according to any of the claims 1 to 6, **characterized in that** the start of the sending (60) of the first response (30) is effected chronologically before the end of the receipt (56) of the second request (28).

8. The method according to any of the claims 1 to 7, **characterized in that** the security module (10) has a buffer memory (18) for intermediately storing data of the processing data stream (20) and/or of the result data stream (22), wherein, during the sequence of the method, parts (34; 34.1, ..., 34.N; 36, 36.1; ..., 36M) of the processing data stream (20) and/or of the result data stream (22) are continuously stored intermediately in the buffer memory (18) and overwritten by consecutive parts (34, 34.1, ..., 34N; 36, 36.1, ..., 36.M), such that the length of the processing data stream (20) and/or of the result data stream (22) that can be processed maximally by the security module (10) is greater than the capacity of the buffer memory (18).

9. The method according to any of the claims 1 to 8, **characterized in that** the generating (58) of the result data stream (22) comprises an encryption or decryption of data of the processing data stream (20) already received.

10. The method according to any of the claims 1 to 9, **characterized in that** the security module (10) is configured as a chip card or as a chip module or as a USB data carrier.

11. A method for transmitting data streams (20, 22) between a terminal (12) having a web browser, and a portable security module (10), wherein the method contains the following steps executed by the terminal (12) utilizing the web browser:
- sending a first request (26) announcing a processing data stream (20) for the security module (10),
- sending a second request (28) containing the processing data stream (20),
- receiving a first response (30) to the first request (26) during the sending of the processing data stream (20) in the second request (28), wherein the first response (30) contains a result data stream (22) generated by the security module (10) from the processing data stream (20).

12. The method according to claim 11, **characterized in that**
- the first request (26) contains an HTTP-GET method,
- the second request (28) contains an HTTP-PUT method or an HTTP-POST method, and
- the processing data stream (20) is sent in the message body of the second request (28), and the result data stream (22) is received in the message body of the first response (30).

13. A portable security module (10) with a processor (14) and at least one memory (16), **characterized in that** the security module (10) is adapted to execute a method according to any of the claims 1 to 10.

14. A computer program product having program commands for at least one processor (14) of a security module (10), wherein the program commands cause the at least one processor (14) to execute a method according to any of the claims 1 to 10.

15. A computer program product having program commands for at least one processor of a terminal (12), wherein the program commands cause the at least one processor to execute a method according to any of the claims 11 or 12.

## Revendications

1. Procédé de transmission de flux de données (20, 22) entre un terminal (12) et un module de sécurité (10) portable qui comporte un serveur Web, le procédé incluant les étapes suivantes exécutées par le module de sécurité (12) à l'aide du serveur Web:
- réception d'une première demande (26) qui annonce un flux de données (20) de traitement
- réception (56) d'une deuxième demande (28) qui contient le flux de données (20) de traitement,
- génération (58) d'un flux de données (22) de résultat, sur la base de données du flux de données (20) de traitement déjà reçues, pendant la réception du flux de données (20) de traitement,
- envoi (60) d'une première réponse (30) à la première demande (26) pendant la génération (58) du flux de données (22) de résultat, la première réponse (30) contenant le flux de données (22) de résultat.

2. Procédé selon la revendication 1, lequel inclut en outre
- envoi (62)) d'une deuxième réponse (32) à la deuxième demande (28) après la fin de l'envoi (60) du flux de données (22) de résultat, la deuxième réponse (32) signalisant l'achèvement du procédé.

3. Procédé selon la revendication 1 ou la revendication 2, **caractérisé en ce que** la communication entre le terminal (12) et le module de sécurité (10) est basée sur protocole de transfert d'hypertexte (HTTP).

4. Procédé selon une des revendications de 1 à 3, **caractérisé en ce que**
- la première demande (26) contient une méthode HTTP GET,
- la deuxième demande (28) contient une méthode HTTP PUT ou une méthode HTTP POST, et
- le flux de données (20) de traitement est reçu dans le corps de message de la deuxième demande (28), et le flux de données (22) de résultat est envoyé dans le corps de message de la première réponse (30).

5. Procédé selon une des revendications de 1 à 4, **caractérisé en ce que** la première et la deuxième demande (26, 28) contiennent chacune une adresse (URL1, URL2), et **en ce que** le module de sécurité (10) est configuré pour distinguer ces demandes (26, 28) au moins en partie au moyen de leurs adresses (URL1, URL2).

6. Procédé selon la revendication 5, **caractérisé en ce que** le module de sécurité (10), à l'aide du serveur Web, reçoit une demande (38) préparatoire et envoie une réponse (40), préparatoire, à la demande (38) préparatoire, la réponse (40), préparatoire contenant une première une adresse (URL1) pour la première demande (26) et une deuxième adresse (URL2) pour la deuxième demande (28).

7. Procédé selon une des revendications de 1 à 6, **caractérisé en ce que** le début de l'envoi (60) de la première réponse (30) a lieu, dans le temps, avant la fin de la réception (56) de la deuxième demande (28).

8. Procédé selon une des revendications de 1 à 7, **caractérisé en ce que** le module de sécurité (10) comporte une mémoire tampon (18) destinée à la mémorisation temporaire de données du flux de données (20) de traitement et/ou du flux de données (22) de résultat, cependant que, pendant le déroulement du procédé, en continu, des parties (34; 34.1,..., 34.N; 36; 36.1, ..., 36.M) du flux de données (20) de traitement et/ou du flux de données (22) de résultat sont temporairement mémorisées dans la mémoire tampon (18) et sont sur-écrites par des parties successives (34; 34.1, ..., 34.N; 36; 36.1,..., 36.M), de telle sorte que la longueur du flux de données (20) de traitement et/ou du flux de données (22) de résultat pouvant au maximum être traitée par le module de sécurité (10) est plus grande que la capacité de la mémoire tampon (18).

9. Procédé selon une des revendications de 1 à 8, **caractérisé en ce que** la génération (58) du flux de données (22) de résultat comprend un cryptage ou décryptage de données déjà reçues du flux de données (20) de traitement.

10. Procédé selon une des revendications de 1 à 9, **caractérisé en ce que** le module de sécurité (10) est réalisé en tant que carte à puce ou en tant que support de données USB.

11. Procédé de transmission de flux de données (20, 22) entre un terminal (12) qui comporte un serveur Web, et un module de sécurité (10) portable, le procédé incluant les étapes suivantes exécutées par le module de sécurité (12) à l'aide du serveur Web:
- envoi d'une première demande (26) qui annonce un flux de données (20) de traitement pour le module de sécurité (10),
- envoi d'une deuxième demande (28) qui contient le flux de données (20) de traitement,
- réception d'une première réponse (30) à la première demande (26) pendant l'envoi du flux de données (20) de traitement dans la deuxième demande (28), la première réponse (30) contenant un flux de données (22) de résultat généré par le module de sécurité (10) à partir du flux de données (20) de traitement.

12. Procédé selon la revendication 11, **caractérisé en ce que**
- la première demande (26) contient une méthode HTTP GET,
- la deuxième demande (28) contient une méthode HTTP PUT ou une méthode HTTP POST, et
- le flux de données (20) de traitement est envoyé dans le corps de message de la deuxième demande (28), et le flux de données (22) de résultat est reçu dans le corps de message de la première réponse (30).

13. Module de sécurité (10) portable ayant un processeur (14) et au moins une mémoire (16), **caractérisé en ce que** le module de sécurité (10) est configuré pour exécuter un procédé selon une des revendications de 1 à 10.

14. Produit programme informatique qui comporte des instructions de programme pour au moins un processeur (14) d'un module de sécurité (10), les instructions de programme entraînant le au moins un processeur (14) à exécuter un procédé selon une des revendications de 1 à 10.

15. Produit programme informatique qui comporte des instructions de programme pour au moins un processeur d'un terminal (12), les instructions de programme entraînant le au moins un processeur à exécuter un procédé selon une des revendications 11 ou 12.
